# EUROPEAN PATENT APPLICATION

(11) **EP 1 659 014 A1**
(43) Date of publication of application: **24.05.2006**
(21) Application number: 04105958.5
(22) Date of filing: 22.11.2004
(51) Int. Cl.: B60J 7/02

(54) **Guide rail for an open roof construction**

(71) Applicant: Inalfa Roof Systems Group B.V., 5804 AH Venray (NL)
(72) Inventor: Conger, Scott Michael, 48038, Michigan (US)
(74) Representative: Voncken, Bartholomeus Maria Ch.

(57) **Abstract**

A guide is provided, comprising a guide channel and a guide element slidably cooperating therewith, wherein the guide channel comprises at least one guide surface for cooperation with a corresponding guide face of the guide element. The guide surface of the guide channel is provided with at least one projecting ridge which runs along said guide surface in a direction in parallel to the direction of movement of the guide element relative to the guide channel. The ridge has an outer tip shaped for notching into the corresponding guide face of the guide element. Such a guide may be part of an open roof construction for a vehicle.

## Description

The invention firstly relates to a guide, comprising a guide channel and a guide element slidably cooperating therewith, wherein the guide channel comprises at least one guide surface for cooperation with a corresponding guide face of the guide element.

When constructing such a guide, conflicting requirement have to be met. At one hand the fit between the guide element and guide channel has to be that close, that no unallowed movements of the guide element are possible within the guide channel, apart from the desired sliding movements of the guide element relative to the guide channel. At the other hand, however, the fit between the guide element and guide channel should be wide enough to limit the friction occurring between the guide element and guide channel when moving relative to each other. In practice, it is very difficult to obtain an adequate compromise between these two requirements, and thus it is observed frequently, that when constructing a guide in which the guide element can slide within the guide channel without the need for excessive driving forces the guide element also will have some possibility of moving in other directions. Such movements in other directions can lead to a number of annoying noises which sometimes are referred to as the buzz-squeak-rattle (BSR) phenomenon. Although, theoretically, it might be possible to eliminate such a BSR-phenomenon by reducing the tolerances between the guide element and guide channel, such a reduction of the tolerances would inevitably lead to an important increase of the friction. To overcome such a friction the driving power should be increased, which would call for larger driving members such as, for example, electric motors. In many applications of such guides however, such as for example when such guides are part of an open roof construction of a vehicle, such an increase of driving member size of driving members is undesired, because the available amount of space for housing such driving members is rather limited.

Still a further effect of reducing the tolerances between the guide element and guide channel is that, although BSR-phenomena are reduced, the increased friction itself will lead to other types of undesired noises.

It is an object of the present invention to provide a novel guide of the type referred to above, in which the mentioned problems are solved in a simple, yet nevertheless effective manner.

Thus, in accordance with the present invention firstly there is provided a guide, comprising a guide channel and a guide element slidably cooperating therewith, wherein the guide channel comprises at least one guide surface for cooperation with a corresponding guide face of the guide element, characterized in that the guide surface of the guide channel is provided with at least one projecting ridge which runs along said guide surface in a direction in parallel to the direction of movement of the guide element relative to the guide channel, wherein the ridge has an outer tip shaped for notching into the corresponding guide face of the guide element.

As a result of the provision of such a projecting ridge, the cooperation between the guide element and guide channel occurs in two manners. Firstly, the ridge cooperates with a correspondingly shaped groove in the corresponding guide face of the guide element, thus preventing any relative movements between the guide channel and guide element different from the desired movement. Thus, the ridge on the guide channel and the groove in the guide element together guide the guide element in the desired direction relative to the guide channel. Secondly, when the ridge has notched deeply enough into the corresponding guide face of the guide element, the original guide surface of the guide channel and guide face of the guide element will contact each other, for creating the original guiding effect of the guide. When the guide surface of the guide channel and guide face of the guide element contact each other, a further notching action of the ridge is stopped.

When assembling a guide in accordance with the present invention, preferable the guide element initially will have a guide surface without a groove. When the guide element is installed in the guide channel and moves along said guide channel for the first time, the ridge will start notching into the corresponding guide face of the guide element and will define therein a corresponding groove. The notching action will stop when the guide channel engages the guide face of the guide element with its guide surface (as expressed above). Then there is a perfect match between the ridge and the groove.

It has to be noted that it also would be possible to provide the guide element on beforehand with a groove which is meant for receiving the ridge of the guide channel. Such a groove may be shallow, such that in the initial stage of cooperation between the guide element and guide channel the ridge will further notch into the groove and will deepen it until the guide surface of the guide channel and guide face of the guide element contact each other. But it is possible too, that the groove already is deep enough for totally receiving the ridge, such that immediately upon the first installation of the guide element into the guide channel the guide surface and guide face will contact each other. However, such a process is risky, because it is difficult to prevent that the groove is shaped too large, such that no perfect match between the ridge and groove will occur and undesired movements of the guide element relative to the guide channel can not be prevented entirely. Therefore it is preferred that the ridge itself will notch into the corresponding guide face of the guide element and thus will define a groove with exactly the desired dimensions for obtaining an optimal fit between the ridge and the groove.

In accordance with a preferred embodiment of the guide according to the present invention the guide channel comprises a number of guide surfaces, wherein at least two of said guide surfaces are provided with the projecting ridge. In such a case, the position of said two guide surfaces provided with a projecting ridge may be such, that they cooperate with different guide faces of the guide element (for example two opposite guide faces of the guide element), but preferably said at least two guide surfaces provided with a protecting ridge cooperate with the guide face of the guide element.

When in accordance with yet another embodiment of the guide in accordance with the present invention the ridge extends upwardly wherein the cooperating guide face is a downwardly facing guide face of the guide element, the cooperation between the ridge and guide face mainly occurs as a result of the gravity. The weight of the guide members (and, of course any supported member connected thereto) then urges the guide surface into contact with the ridge for creating the notching effect. The gravity also will keep the guide surface of the guide channel into contact with the corresponding guide face of the guide element when the groove created by such a notching effect has obtained a sufficient depth, as discussed before.

Although it is possible, that the projecting ridge has many different shapes, it is preferred that it has a triangular cross-section. The upwardly directed corner of the triangular cross-section then will act as the outer tip for notching into the guide face of the guide element.

In an other embodiment of the guide, the guide channel comprises at least one additional guide surface positioned opposite to the at least one guide surface that is provided with the projecting ridge, for cooperation with an additional guide face of the guide element opposite to the guide face notched by the projecting ridge. The cooperation between the additional guide surface of the guide channel and additional guide face of the guide element will prevent any movement of the guide element relative to the guide channel in a direction in which the ridge will disengage from the groove. Without the provision of such additional guide surfaces and guide faces and relying only on gravity, vibrations could lead to such a disengagement. However, a cooperation between additional guide surfaces and additional guide faces will prevent such a disengagement, also in the case of strong vibrations acting on the guide (for example when the guide is part of a moving object, such as a moving vehicle).

Although, preferably, the ridge extends continuously along said guide surface (and thus extends uninterrupted along substantially the entire length of the guide channel) it might be possible too that the ridge extends intermittently along said guide surface, that means that a number of short ridges are positioned beside each other in a spaced relationship.

The invention further relates to a guide assembly comprising two guides with each a guide channel and a guide element slidably cooperating therewith, wherein the guide channels are spaced and extend in parallel to each other, and wherein at least one of said two guides defines a guide according to the invention.

In a guide assembly of the above type, having two spaced guide channels extending in parallel to each other, the provision of one or more ridges at only one of the guides can be sufficient to obtain the desired effect. However, if a constructional member bridging the two guide elements cooperating with the two guide channels is deformable (which almost always will be the case) it is preferred that both guides comprise such ridge or ridges to prevent jamming of the guide elements in the guide channels.

In a preferred embodiment of the guide assembly it is part of an open roof construction for a vehicle, which open roof construction comprises a roof opening provided in a stationary roof part of a vehicle and a movable member for opening and closing said roof opening, wherein the guide channel is part of the stationary roof part of the vehicle, whereas the guide member is part of the movable member.

Finally, the invention relates to an open roof construction for a vehicle, comprising a guide assembly according to the present invention.

Next, the invention will be elucidated while referring to the drawing, in which an embodiment thereof is illustrated.
Figure 1 shows a cross-sectional view of an embodiment of a guide in accordance with the present invention, and
figure 2 shows, on a small scale, a schematic cross-sectional view of an open roof construction for a vehicle. Firstly referring to figure 1 a guide is illustrated, comprising a guide channel 1 and a guide element 2 slidably cooperating therewith. The direction of sliding movement of the guide element relative to the guide channel 1 will occur perpendicularly to the plane of the drawing.

The guide channel 1 comprises two guide surfaces 3 and 4 and two additional guide surfaces 5 and 6. The guide element is provided with a lower guide face 7 and two upper, additional guide faces 8 and 9.

Further a connecting member 10 is illustrated which connects the guide member 2 to any constructional member (not illustrated) which has to be guided slidably by the guide.

For completeness sake, the guide channel 1 comprises an additional channel 11 in which a driving cable 12 is housed which is connected at 13 to the guide member 2. A movement of the driving cable 12 in the additional channel 11 will lead to a corresponding movement of the guide member 2 in the guide channel 1.

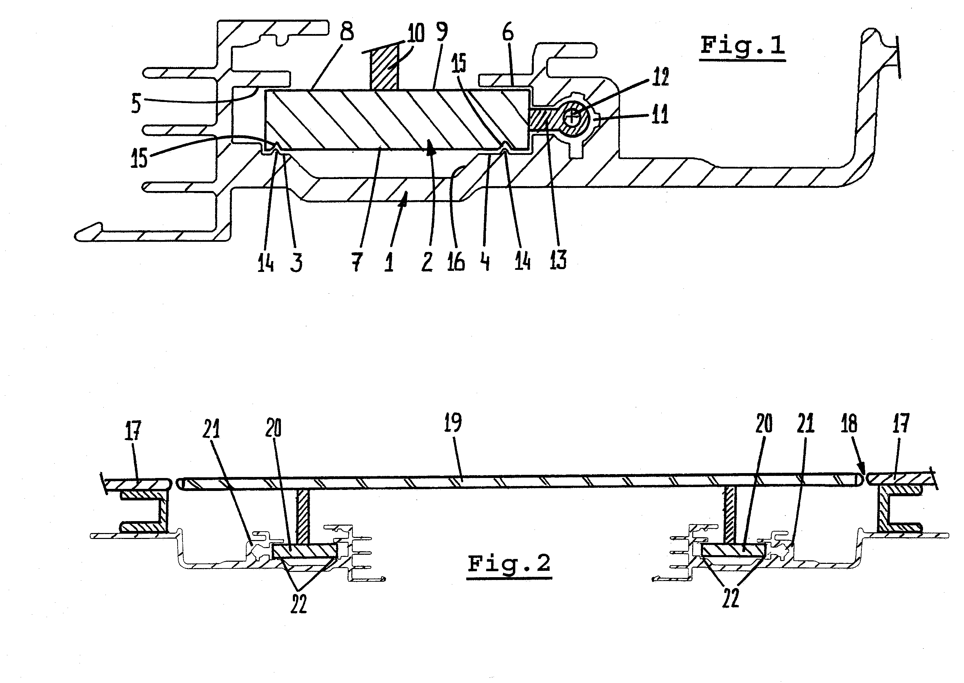

The guide surfaces 3 and 4 of the guide channel 1 each are provided with an upwardly projecting ridge 14. These ridges 14 cooperate with grooves 15 provided in the corresponding lower guide face 7 of the guide member 2. Preferably the grooves 15 are notched into the guide face 7 by the ridges 14 (as a result a very close fit between the ridges 14 and grooves 15 will occur). In figure 1 a slight distance between the grooves 15 and ridges 14 is illustrated, but this distance does not exist in practice.

Further, in figure 1 a short distance is illustrates between the guide surfaces 3 and 4 of the guide channel 1 and the corresponding downwardly directed guide face 7 of the guide member 2. In practice, however, such guide surfaces 3 and 4 and guide face 7 will engage each other.

The cooperation between the additional guide surfaces 5 and 6 of the guide channel 1 and the upwardly directed additional guide faces 8 and 9 of the guide member 2 may be such, that, in accordance with the illustration in figure 1, a slight distance occurs between these elements, which distance only is eliminated when the guide member 2 moves relative to the guide channel 1 (in figure 1 upwardly). However, it is possible too, that in the original position of the guide member 2, in which it rests with its lower guide face 7 upon the guide surfaces 3 and 4, a contact occurs between the additional guide surfaces 5 and 6 and additional guide faces 8 and 9.

In the illustrated embodiment the guide surfaces 3 and 4 extend in the same plane (that means that they are positioned at the same level) and are separated by a depression 16. However, it would be possible too that the guide surfaces 3 and 4 directly merge into each other.

Further, it is also possible that other parts of the guide channel 1 comprise projecting ridges 14, such as the additional guide surfaces 5 and 6. Still further, an embodiment is mentioned in which only one of the guide surfaces 3 and 4 comprises a projecting ridge 14. It goes without further saying, that many combinations are possible.

Although not visible in figure 1, preferably the ridges 14 will extend continuously along the guide surface 3 and 4 (in a direction perpendicularly to the plane of the drawing).

As illustrated in figure 1, the projecting ridges 14 have a triangular cross-section with one corner of the ridge 14 defining a tip for notching into the corresponding guide face 7 of the guide element 2. Such a notching effect can be obtained when a guide member 2 comprising an initially completely flat lower guide face 7 is positioned on top of the ridges 14, after which a movement of the guide member 2 relative to the guide channel 1 will make the ridges 14 to notch into the corresponding guide face 7 for defining the grooves 15. However, it is also possible, (but not preferred) that the grooves 15 are shaped in the guide face 7 of the guide member 2 before the guide member 2 is installed in the guide channel 1.

Next, reference is made to figure 2. It shows, schematically and on a reduced scale, part of a stationary roof part 17 of a vehicle in which a roof opening 18 is provided. In a manner not to be described in detail and known per se, said roof opening 18 can be opened and closed by a movable member 19 (which, then, will move in a direction perpendicularly to the plane of drawing in figure 2). The movable member 19 is provided with slide shoes 20 acting as slide members according to the present invention. The slide shoes 20 cooperate with guide channels 21 in accordance with the present invention. The guide channels 21 are spaced and extend in parallel to each other.

It is noted, that in figure 2 any driving members for obtaining the movement of the moveable member 19 are omitted.

In the embodiment illustrated in figure 2 both guide channels 21 are provided with projecting ridges 22; however, it is conceivable too that only one of the guide channels 21 comprises such ridges 22.

Although in the above a guide has been described comprising a guide channel and a guide element slidably cooperating therewith, it should be clear that such a guide also could comprise a number of such guide elements cooperating with the same guide channel. In the case of an open roof construction as illustrated in figure 2 this means, that in each guide channel 21 at least two guide members or slide shoes 20 will be positioned.

The invention is not limited to the embodiment described before, which may be varied widely within the scope of the invention as defined by the appending claims.

## Claims

1. Guide, comprising a guide channel and a guide element slidably cooperating therewith, wherein the guide channel comprises at least one guide surface for cooperation with a corresponding guide face of the guide element, **characterized in that** the guide surface of the guide channel is provided with at least one projecting ridge which runs along said guide surface in a direction in parallel to the direction of movement of the guide element relative to the guide channel, wherein the ridge has an outer tip shaped for notching into the corresponding guide face of the guide element.

2. Guide according to claim 1, wherein the guide channel comprises a number of guide surfaces and wherein at least two of said guide surfaces are provided with a projecting ridge.

3. Guide according to claim 2, wherein said at least two guide surfaces provided with a projecting ridge cooperate with the same guide face of the guide element.

4. Guide according to one of the previous claims, wherein the ridge extends upwardly and wherein the cooperating guide face is a downwardly facing guide face of the guide element.

5. Guide according to any of the previous claims, wherein the projecting ridge has a triangular cross-section.

6. Guide according to any of the previous claims, wherein the guide channel comprises at least one additional guide surface positioned opposite to the at least one guide surface that is provided with the projecting ridge, for cooperation with an additional guide face of the guide element opposite to the guide face notched by the projecting ridge.

7. Guide according to any of the previous claims, wherein the ridge extends continuously along said guide surface.

8. Guide according to any of the claims 1-6, wherein the ridge extends intermittently along said guide surface.

9. Guide assembly, comprising two guides with each a guide channel and a guide element slidably cooperating therewith, wherein the guide channels are spaced and extend in parallel to each other, and wherein at least one of said two guides comprises a guide according to any of the previous claims.

10. Guide assembly according to claim 9 and being part of an open roof construction for a vehicle, which open roof construction comprises a roof opening provided in a stationary roof part of a vehicle and a movable member for opening and closing said roof opening, wherein the guide channel is part of the stationary roof part of the vehicle, whereas the guide member is part of the movable member.

11. Open roof construction for a vehicle, comprising a guide assembly according to claim 10.
